# EUROPÄISCHE PATENTSCHRIFT

(11) **EP 3 148 824 B1**
(45) Veröffentlichungstag und Bekanntmachung des Hinweises auf die Patenterteilung: **01.04.2020**
(21) Anmeldenummer: 15727601.5
(22) Anmeldetag: 27.05.2015
(51) Int. Cl.: B60G 9/00

(54) **ACHSANORDNUNG**
AXLE ASSEMBLY
ENSEMBLE ESSIEU

(30) Priorität: 27.05.2014 DE 202014102472 U
(43) Veröffentlichungstag der Anmeldung: 05.04.2017
(73) Patentinhaber: Alois Kober GmbH, 89359 Kötz (DE)
(72) Erfinder: SPIEGLER, Roland, 89312 Günzburg (DE); LEHNER, Helmut, 89359 Kötz (DE); ALBERT, Thomas, 89278 Nersingen (DE); STADLBAUER, Wolfgang, 89352 Ellzee (DE); HERMELING, Frank, 86381 Krumbach (DE); LUKAS, Maximilian, 86842 Türkheim (DE)
(74) Vertreter: Ernicke, Moritz
(86) Internationale Anmeldenummer: PCT/EP2015/061639
(87) Internationale Veröffentlichungsnummer: WO 2015/181200

(56) Entgegenhaltungen:
- EP-A1- 2 055 511
- WO-A1-2007/062744
- DE-A1- 19 605 283
- DE-U1-202008 003 758
- US-A- 4 544 180
- US-A- 4 637 628
- US-A- 4 951 962

## Beschreibung

Die Erfindung betrifft eine Achsanordnung mit den Merkmalen im Oberbegriff des Hauptanspruchs.

Eine solche Achsanordnung für ein Straßenfahrzeug in Form einer Starrachse ist aus der US 4 951 962 A bekannt. Sie weist einen hohlen Achskörper mit einem innen liegenden Torsionsstab auf, an deren beiden Enden jeweils eine Stützplatte mit einem Radträger befestigt ist. Der hohle Achskörper ist direkt und weiter innen mit Längslenkern verbunden.

Ferner sind Verbundlenkerachsen aus der EP 2 055 511 A und der DE 196 05 283 A bekannt, bei denen die Räder an einem Ende von Längslenkern befestigt sind und die Längslenker im mittleren Bereich direkt miteinander durch ein Querprofil verbunden sind.

Es ist Aufgabe der vorliegenden Erfindung, eine hinsichtlich der Stabilisierung verbesserte Achsanordnung aufzuzeigen.

Die Erfindung löst diese Aufgabe mit den Merkmalen im Hauptanspruch.
Die Achsanordnung kann eine oder mehrere Achsen aufweisen, die jeweils einen hohlen Achskörper mit endseitig befestigten Achsköpfen haben. Der hohle Achskörper kann eine begrenzte Formsteifigkeit, insbesondere Torsionssteifigkeit, aufweisen. Zur Verbesserung der Achsstabilität im Fahrbetrieb ist eine Stabilisierungseinrichtung vorgesehen, die im hohlen Achskörper angeordnet und eingebaut ist. Der Einbau kann bei der Erstausrüstung oder nachträglich erfolgen.

Bei der beanspruchten Achsanordnung sind die Achsköpfe jeweils an einem Ende des Achskörpers befestigt. Ferner ist es im Unterschied zu Verbundlenkerachsen günstig, dass die Achsköpfe jeweils einen Anschluss für die Befestigung eines Fahrzeugrads und auch einen Anschluss für einen Längslenker, insbesondere für dessen Lenkerende, aufweisen. Die Längsachse des Achskörpers und die Drehachsen der Räder können dadurch fluchten oder zumindest eng benachbart sein.

Die Stabilisierungseinrichtung ist für alle Arten von Achsanordnungen von Vorteil und verbessert die Fahrstabilität. Besondere Vorteile bestehen in Verbindung mit einer Luftfederung oder einer anderen Federung, die keine oder nur geringe Führungsfunktion für die Achse hat. Die Stabilisierungseinrichtung kann insbesondere bei einer Umrüstung der Achsanordnung von einer Schraubenfederung auf eine Luftfederung eingebaut werden.

Die Stabilisierungseinrichtung weist ein Stabilisierungselement mit einem endseitigen Montagebeschlag auf, der an beiden Enden angeordnet ist und mit dem die Montage an einem Achskopf erfolgen kann. Das Stabilisierungselement ist vorzugsweise als Torsionsstab ausgebildet, der die Torsionsmomente aufnehmen kann und den Achskörper entlastet. Die Anordnung des Stabilisierungselement im hohlen Innenraum des Achskörpers ist dabei hinsichtlich der Einleitung und Aufnahme der im Fahrbetrieb auftretenden Torsionsmomente von besonderem Vorteil. Der von den Momenten und Kräften entlastete hohle Achskörper unterliegt einer wesentlich verringerten Verformungsgefahr.

Die Stabilisierungseinrichtung erlaubt es andererseits, die Achse mit einem hohlen und seitlich offenen Achskörper auszustatten. Dies hat Vorteile hinsichtlich des Bau- und Fertigungsaufwands sowie der Gewichtsminimierung. Der gleiche Achskörper nebst Achsköpfen kann andererseits bei einem Umrüsten der Federung beibehalten werden und wird lediglich mit der Stabilisierungseinrichtung ergänzt. Eine Umrüsteinheit mit einer Luftfederung und einer Stabilisierungseinrichtung erleichtert den Umbau auf eine andere Federung.

Die Stabilisierungseinrichtung ist an die Achse adaptiert und wird schweißfrei und damit ohne Verzugsgefahr montiert. Die Montage und Verbindung kann lösbar sein. Über den Montagebeschlag der Stabilisierungseinrichtung werden die eingeleiteten Kräfte und Momente aufgenommen und funktionssicher auf den Torsionsstab oder ein anderes Stabilisierungselement übertragen.

Die Stabilisierungseinrichtung und die Achse können definiert und aneinander angepasste Schnittstellen für die Zuordnung und Montage aufweisen. Dies sorgt dafür, dass bei einem nachträglichen Einbau, insbesondere einer Nachrüstung oder Umrüstung die Zulassungsbestimmungen des Fahrzeugs eingehalten werden und eine zulassungsgerechte Zuordnung erfolgt. Hierdurch ist es möglich, eine Fahrzeugzulassung auf vereinfachten Wege über eine allgemeine Betriebserlaubnis statt über eine aufwändige Einzelzulassung zu erhalten. Andererseits ist eine Qualitätssicherung möglich. Für die Ausgestaltung der Schnittstellen ist es von Vorteil, wenn diese Schnittstellenelemente an der Achse und an der Stabilisierungseinrichtung aufweisen, die in Montagestellung formschlüssig ineinander greifen und gegebenenfalls auch die eingeleiteten Lasten aufnehmen und übertragen.

Die beanspruchte Achsanordnung hat wesentliche Vorteile hinsichtlich Fahrstabilität, Komfort, Bauhöhe und Traglast. Sie kann als Erstausstattung an einem Fahrzeug verbaut sein. Sie kann auch nachträglich und im Austausch gegen eine andere Achsanordnung an ein vorhandenes Fahrzeug bzw. Chassis, insbesondere an ein Serien-Chassis, angebaut werden.

Die Achsanordnung kann modular ausgebildet sein. Die Modularität kann insbesondere die Variation und Austauschbarkeit von Achsböcken sowie ggf. auch von Längslenkern betreffen. Hierdurch kann ein Baukastensystem gebildet werden, bei dem eine vorhandene Achse, insbesondere deren Achskörper und Achsköpfe, aufwandsarm an unterschiedliche Bauformen und Abmessungen von Fahrgestellen bzw. Chassis angepasst werden können. Bei gegebener Achslänge kann auch über eine Konsolenanpassung eine Adaption an unterschiedliche Chassisbreiten erfolgen. Andererseits kann durch Einsatz einer anderen Achslänge bei gegebenen Achsböcken die Spurweite verändert werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische und abgebrochene Ansicht eines Fahrzeugs mit Chassis und einer Achsanordnung mit einer Federung und Stabilisierungseinrichtung,
- Figur 2:: eine Stirnansicht der Anordnung von Figur 1 gemäß Pfeil II von Figur 1,
- Figur 3:: eine Seitenansicht der Anordnung von Figur 1 gemäß Pfeil III von Figur 1,
- Figur 4:: eine Unteransicht der Anordnung von Figur 1 gemäß Pfeil IV von Figur 1,
- Figur 5 und 6:: zwei perspektivische Ansichten einer Achse mit einer Stabilisierungseinrichtung mit Blick von oben und unten,
- Figur 7 bis 9:: eine Unteransicht, eine Seitenansicht und eine Draufsicht einer Achse mit einer Stabilisierungseinrichtung,
- Figur 10:: vergrößerte Darstellung eines Details X von Figur 7,
- Figur 11:: einen Querschnitt der Achse gemäß Schnittlinie XI - XI von Figur 8,
- Figur 12:: einen abgebrochenen Längsschnitt durch die Achse und die Stabilisierungseinrichtung an der Montagestelle gemäß Schnittlinie XII - XII von Figur 9 und
- Figur 13:: eine perspektivische Ansicht eines Stabilisierungselements.

Die Erfindung betrifft eine Achsanordnung (5) mit einer Stabilisierungseinrichtung (9) für ein Fahrzeug (1). Die Erfindung betrifft ferner eine Umrüsteinheit mit einer Luftfederung (7) und einer Stabilisierungseinrichtung (9). Ferner bezieht sich die Erfindung auf ein Fahrzeug (1) mit einer solchen Achsanordnung (5) und einer Stabilisierungseinrichtung (9).

Das Fahrzeug (1) ist als Landfahrzeug ausgebildet. Vorzugsweise handelt es sich um ein Straßenfahrzeug. Das Fahrzeug (1) kann in einer Variante als Anhänger ausgebildet sein und wird im Fahrbetrieb von einem Zugfahrzeug, insbesondere einem PKW oder LKW, bewegt, insbesondere gezogen. In einer anderen Variante kann das Fahrzeug (1) als Kraftfahrzeug ausgebildet sein. Ein solches Kraftfahrzeug kann z.B. einen motorisierten Zugkopf mit einem Frontantrieb und ein Anbauchassis (2) mit der Achsanordnung (5) aufweisen. Es kann alternativ als Serienfahrzeug ausgebildet sein.

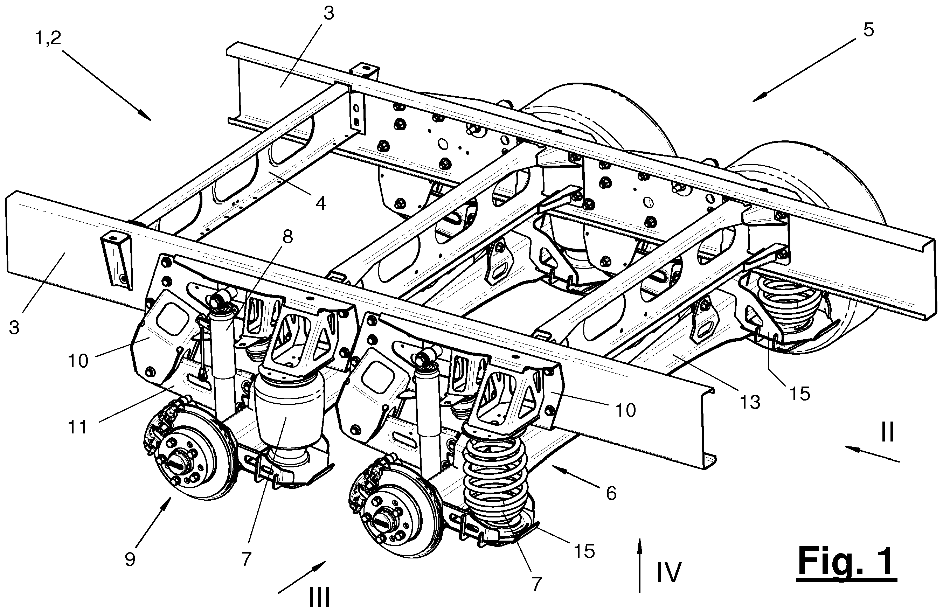

Das Fahrzeug (1) weist ein Fahrgestell oder Chassis (2) in beliebiger Bauweise auf. Vorzugsweise handelt es sich um einen Leiterrahmen. In Figur 1 ist ein Chassis ausschnittsweise dargestellt, welches z.B. zwei parallele Längsträger (3) und ein oder mehrere dazwischen angeordnete und mit den Längsträgern (3) festverbundene Querträger (4) aufweist. Die Träger (3,4) bestehen bevorzugt aus Metall, insbesondere Stahl und haben eine profilierte Querschnittsform. Die Profilform weist einen aufrechten Steg und ein oder mehrere randseitige Querstege auf. Das Trägerprofil kann z.B. C-förmig sein. Bei einem Anhänger (1) ist das Chassis frontseitig mit einer Deichsel versehen.

Die Achsanordnung (5) ist am Chassis (2) in geeigneter Weise befestigt. Sie erlaubt eine niedrige Bauhöhe und ein Absenken des Fahrzeugschwerpunkts. Zudem können kleine Räder mit einem Felgendurchmesser von z.B. 13 Zoll eingesetzt werden.

Auf dem Chassis (2) kann ein Aufbau (nicht dargestellt) herstellerseitig oder nachträglich angeordnet werden. Für den Aufbau kann eine niedrige Beladehöhe bei ebener Ladefläche erreicht werden. Derartige abgesenkte Chassis (2) und Achsanordnungen (5) sind besonders für Fahrzeuge (1) mit einem begehbaren Kastenaufbau geeignet, wobei diese Fahrzeuge (1) z.B. als Wohnwagen oder Wohnmobile, Verkaufsfahrzeug, Präsentationsfahrzeug oder dergleichen eingesetzt werden. Alternativ sind beliebige andere Aufbauten möglich.

Die Achsanordnung (5) ist in Figur 1 bis 4 in verschiedenen Ansichten dargestellt. Sie weist eine Achse (6) auf, die einzeln oder mehrfach vorhanden sein kann. In den Ausführungsbeispielen ist eine Doppel- oder Tandemachse dargestellt. Alternativ ist eine Einzelachse, Trippelachse etc. möglich.

Die Achse (6) umfasst jeweils einen Achskörper (13) und einen endseitigen Achskopf (15). Der Achskopf (15) kann mehrfach vorhanden sein, wobei in den gezeigten Ausführungsbeispielen die Achse (6) an beiden Enden des Achskörpers (13) einen Achskopf (15) aufweist. Der Achskörper (13) hat eine lang gestreckte Form und ist als Hohlkörper ausgebildet.

In den gezeigten Ausführungsbeispielen hat der Achskörper (13) an einer Längsseite, insbesondere an der Unterseite eine Mantelöffnung (14). Diese ist axial ausgerichtet und erstreckt sich bevorzugt über die Gesamtlänge des Achskörpers (13). Der Achskörper (13) besteht aus einem beliebig geeigneten Material, insbesondere Metall, bevorzugt Stahl. Der gezeigte Achskörper (13) ist als dünnwandiges Blechteil mit einem im Wesentlichen U-förmigen Querschnitt ausgebildet.

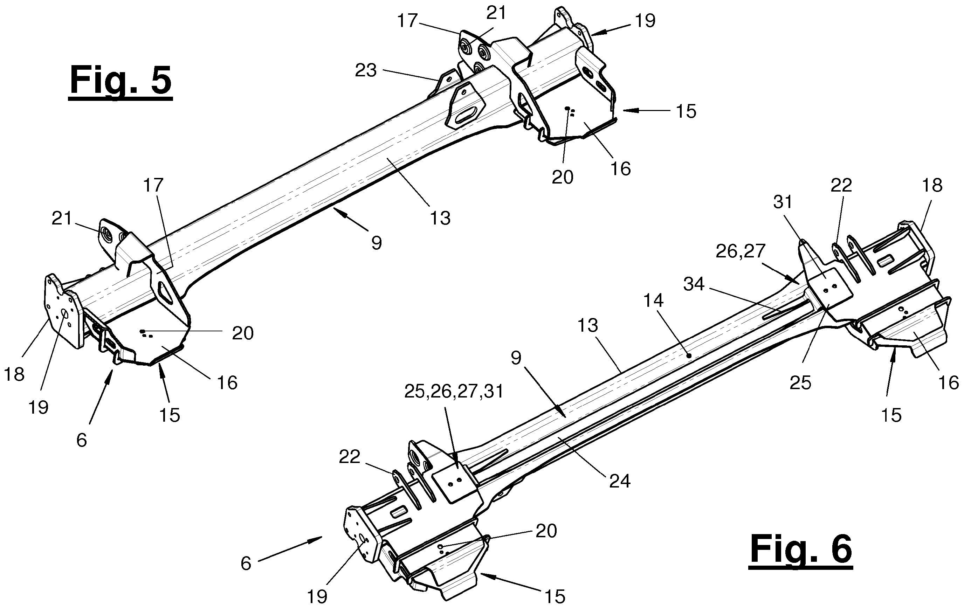

Der Achskopf (15) kann in beliebig geeigneter Weise ausgebildet und am Achskörper (13) befestigt sein. Wie Figur 5 bis 11 verdeutlichen, weist der Achskopf (15) mehrere plattenartige Kopfteile (16,17,18) auf, die in geeigneter Weise miteinander verbunden sind. Der Achskopf (15) kann dabei einteilig oder mehrteilig ausgestaltet sein. In den gezeigten Ausführungsbeispielen ist er als gebogenes und/oder geschweißtes dünnwandiges Blechteil ausgebildet. Er ist am Ende des Achskörpers (13) vorzugsweise durch eine Schweißverbindung befestigt.

Die Achsanordnung (5) weist einen am Chassis (2) montierbaren Achsbock (10) mit einem Längslenker (11) für die Anbindung der Achse (6) auf. Für jede Achse (6) können mehrere, insbesondere zwei Achsböcke (10) mit Längslenkern (11) vorhanden sein. Die Achsböcke (10) weisen flache Biege- und/oder Prägeteile aus Stahlblech als plattenartige Anbauteile auf und werden hierüber am jeweiligen Längsträger (3) z.B. seitlich befestigt, insbesondere angeschraubt. Die Achsböcke (10) können eine Mehrfachfunktion für den Anbau anderer Komponenten der Achsanordnung (5) haben. Hierfür können sie z.B. Konsolen für eine Federung (7) und für das Schwenklager des Längslenkers (11) aufweisen, die quer vom plattenartigen Anbauteil abstehen. Die Achsböcke (10) können auch Ausnehmungen am Längsträger (3) überbrücken oder zur Verbindung von Längsträgerabschnitten dienen.

Die Achsanordnung (5) kann ferner einen Panhardstab (12) für eine oder alle Achsen (6) aufweisen. Der Panhardstab (12) ist am einen Ende schwenkbar über einen Anschluss (23) an der Oberseite des Achskörpers (13) gelagert und ist am anderen Ende ebenfalls um eine Achse schenkbar am Chassis (2), insbesondere an einem Quer- oder Längsträger (4) gelagert. In einer anderen Variante kann ein Wattgestänge eingesetzt werden. Die Achsanordnung (5) kann auch ohne diese Komponenten auskommen.

Die Achsanordnung weist ferner eine Federung (7) für die Achse(n) (6) auf. Die Federung (7) kann in unterschiedlicher Weise ausgebildet sein. In Figur 1 bis 4 sind beispielhaft zwei Varianten dargestellt, wobei die Federung (7) als Luftfederung und/oder als Schraubenfederung ausgebildet ist. Die Federung (7) hat hierfür entsprechende Federelemente, z.B. Luftfederbalge oder Schraubenfedern, die zwischen dem Chassis (2) und der Achse (6) angeordnet sind. Die Luftfederung (7) ist vorzugsweise als Vollluftfeder, ggf. mit Absenkfunktion der Chassis-Oberkante bis auf die Reifenoberkante ausgebildet. Die Federelemente sind z.B. mit dem einen oberen Ende über die Konsole am Achsbock (10) mit dem Chassis (2) und am unteren Ende mit dem Achskopf (15) verbunden.

Die Achsanordnung (5) kann ferner Stoßdämpfer (8) aufweisen, die ebenfalls am oberen Ende mit dem Achsbock (10) und am unteren Ende mit dem Achskopf (15) verbunden sind. Die Federelemente (7) und die Dämpfer (8) haben eine im Wesentlichen vertikale Ausrichtung und sind jeweils einander gegenüberliegend beidseits des Achskörpers (13) am Achskopf (15) angeordnet und befestigt.

Die vorerwähnten Kopfteile (16,17,18) des Achskopfs (15) weisen einen Anschluss (19 - 22) für Teile der Achsanordnung (5) auf. Ein Kopfteil (16) ist als Bodenplatte ausgebildet, die liegend am Achskörper (13), insbesondere an dessen Unterseite angeordnet und quer zur Längsachse des Achskörpers (13) ausgerichtet ist. Sie überdeckt den Endbereich der Mantelöffnung (14). Die Bodenplatte (16) weist einen Anschluss (20) für die Federung (7) und einen Anschluss (22) für den Dämpfer (8) auf.

Die Bodenplatte (16) ist randseitig mit einem aufrechten Kopfteil (17) verbunden, das als Steg ausgebildet ist und einen Anschluss (21) für den Längslenker (11), vorzugsweise für dessen Lenkerende, aufweist. Die Anschlüsse (21,22) für Dämpfer (8) und Längslenker (11) sind nebeneinander auf der einen Seite des Achskörpers (13) angeordnet, wobei sich der Anschluss (20) für die Federung (7) auf der anderen Seite befindet.

Der Steg (17) ist an der Oberseite des Achskörpers (13) angeordnet und übergreift diesen. Dabei kann der Steg (17) einen abgewinkelten Stützansatz aufweisen, der sich in Axialrichtung des Achskörpers (13) erstreckt und an dessen Oberseite befestigt, insbesondere angeschweißt ist. Die dünnwandigen und leichtgewichtigen Kopfteile (16,17) können als Stanz- und Biegeteil aus Stahlblech ausgebildet sein.

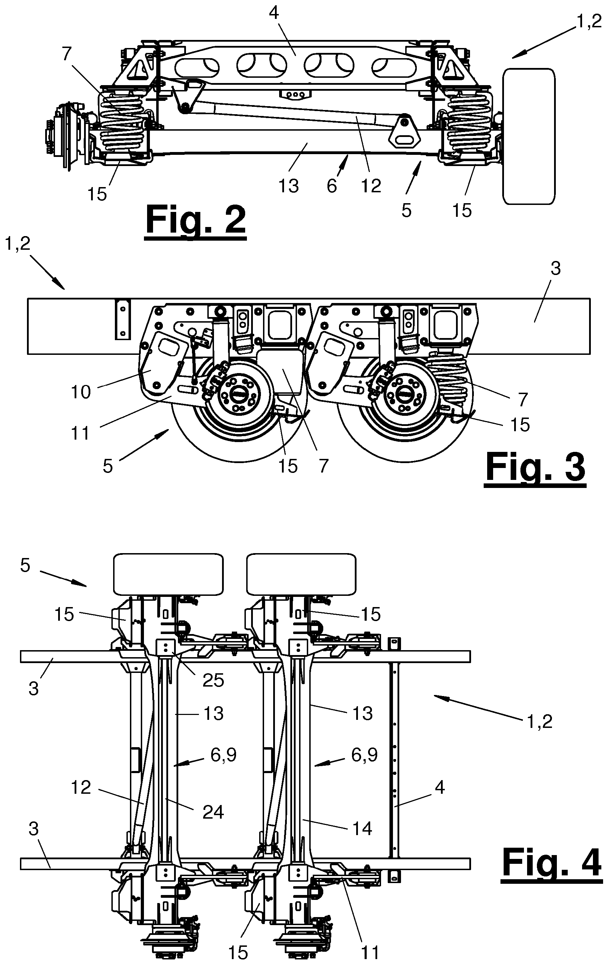

Ein Kopfteil (18) ist als Stirnplatte ausgebildet, die am stirnseitigen Ende des Achskörpers (13) und des Achskopfs (15) angeordnet ist und mit vorzugsweise beiden verbunden, insbesondere verschweißt, ist. Die Stirnplatte (18) weist einen Anschluss (19) für einen Radträger, z.B. einen Achsbolzen, auf. Auf dem Radträger ist die in Figur 1 und 2 dargestellte Nabe für ein Fahrzeugrad drehbar gelagert. Figur 1 und 2 zeigen auch eine Bremseinrichtung, z.B. eine Scheibenbremse, die an der Achse (6) abgestützt ist.

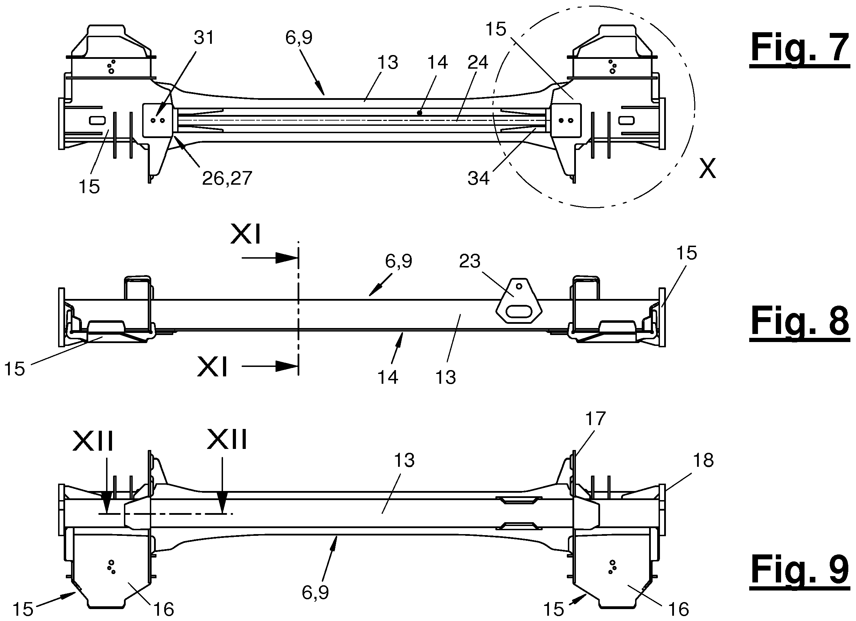

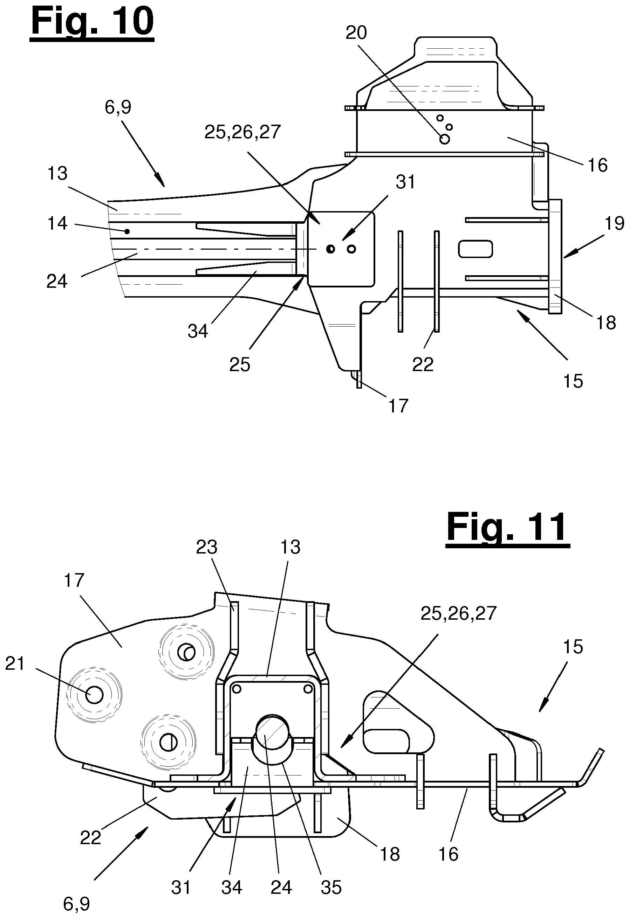

Wie Figur 7 und die Detaildarstellung von Figur 10 verdeutlichen, ist am Achskopf (15) ein Stützelement (34) angeordnet, welches in den hohlen Achskörper (13) greift. Es kann an die Bodenplatte (16) angeformt sein. Das Stützelement (34) weist z.B. einen von der Bodenplatte (16) in den hohlen Achskörper (13) ragenden Steg auf. Der quer zur Längsachse des Achskörpers (13) ausgerichtete Steg weist am freien Rand parallele und seitlich distanzierte Führungszugen auf, die sich in der besagten Längsrichtung zur Fahrzeugmitte erstrecken und an den Seitenwänden des Achskörpers (13) führend anliegen. Sie können hier auch befestigt sein, z.B. durch eine Schweißnaht.

Die Achse (6) weist die eingangs erwähnte Stabilisierungseinrichtung (9) auf. Diese ist im hohlen Achskörper (13) angeordnet. Die Stabilisierungseinrichtung (9) ist an den Achskörper (13) adaptiert. Sie kann bei Bedarf und ggf. nachträglich im Achskörper (13) eingebaut werden.

Die Stabilisierungseinrichtung (9) weist ein Stabilisierungselement (24) und einen endseitigen Montagebeschlag (25) auf. Der Montagebeschlag (25) ist mehrfach, insbesondere zweifach vorhanden und ist an beiden Enden des Stabilisierungselements (24) angeordnet.

Das Stabilisierungselement (24) kann einzeln oder mehrfach vorhanden sein. Es ist z.B. als Torsionsstab oder als anderes, Torsionsmomente aufnehmendes Stabilisierungselement ausgebildet. Es besteht aus einem beliebig geeigneten Material, insbesondere aus Stahl und hat eine lang gestreckte Form. In den Ausführungsbeispielen ist das Stabilisierungselement (24) als einzelner gerader Torsions-Rundstab ausgebildet.

Das Stabilisierungselement (24) ist im hohlen Innenraum des Achskörpers (13) angeordnet und erstreckt sich in dessen Längsrichtung. Das Stabilisierungselement (24) kann im Querschnitt gesehen eine zentrale Lage im hohlen Innenraum des Achskörpers (13) einnehmen.

Der Montagebeschlag (25) dient zur Montage der Stabilisierungseinrichtung (9) an dem oder den Achsköpfen (15) und überträgt die Lasten, insbesondere Torsionsmomente zwischen dem jeweiligen Achskopf (15) und dem Stabilisierungselement (24). Hierdurch wird der hohle Achskörper (13) entlastet und gegen Verformung geschützt.

Die Stabilisierungseinrichtung (9) ist vor allem in Verbindung mit einer Luftfederung (7) von Vorteil und wird bevorzugt zusammen mit dieser eingesetzt. Die Stabilisierungseinrichtung (9) und die Luftfederung (7) mit ihren Federelementen können zusammen eine Umrüsteinheit bilden. Diese kann auch weitere Komponenten der Luftfederung (7), z.B. Ventile, eine Steuereinheit etc., beinhalten. Mit der Umrüsteinheit kann z.B. eine vorhandene und mit Schraubenfedern ausgerüstete Achsanordnung (5) der in Figur 1 gezeigten Art schnell und unkompliziert auf eine komfortablere Luftfederung (7) umgerüstet werden. Dies kann ggf. unter erleichterten Zulassungsbedingungen im Rahmen einer allgemeinen Betriebserlaubnis erfolgen.

Die Stabilisierungseinrichtung (9) kann auch eine eigenständige Einheit darstellen und unabhängig von Federungskomponenten verkauft werden. Die Stabilisierungseinrichtung (9) kann auch bei anderen Arten von Federungen (7) für eine verbesserte Stabilität und Entlastung der Achse (6), insbesondere ihres Achskörpers (13) sorgen. Wenn eine Federung (7), z.B. die beispielhaft gezeigte Schraubenfederung, genügend Seitenführung für die Achse (6) bietet, kann die Stabilisierungseinrichtung (9) ggf. entfallen.

Die Stabilisierungseinrichtung (9) und die Achse (6) haben definierte und aneinander angepasste Schnittstellen (26,27) für die zulassungsgerechte Zuordnung und Montage. Die Schnittstellen (26,27) sind am Montagebeschlag (25) und am Achskopf (15) angeordnet. Sie weisen bevorzugt in Montagestellung formschlüssig ineinander greifende Schnittstellenelemente (29,30) auf, die gegebenenfalls auch die Lasten, insbesondere Torsionsmomente, aufnehmen und übertragen können.

Die Schnittstellenelemente (29,30) können in unterschiedlicher Weise ausgebildet sein. In den gezeigten Ausführungsbeispielen ist das eine Schnittstellenelement (29) als vorstehender Ansatz und das andere Schnittstellenelement (30) als hierzu passende und insbesondere komplementäre Öffnung ausgebildet. Der Ansatz (29) ist in den Ausführungsbeispielen an der Stabilisierungseinrichtung (9) und die Öffnung (30) am Achskopf (15) angeordnet. Sie kann hier z.B. als Ausschnitt im Kopfteil (16) bzw. der Bodenplatte ausgebildet sein. Die gegenseitige Zuordnung kann alternativ vertauscht sein. Die Querschnittsform der Schnittstellenelemente (29,30) ist z.B. prismatisch, wobei sie alternativ eine andere Kontur, z.B. kreisrund, oval oder dgl. haben kann.

Die Stabilisierungseinrichtung (9), insbesondere ihr Montagebeschlag (25), ist im hohlen Achskörper (13) schweißfrei befestigt. Der Montagebeschlag (25) und der Achskopf (15) können lastaufnehmend und formschlüssig aneinander montiert werden, was z.B. über die vorgenannten Schnittstellen (26,27) erfolgen kann. Zudem ist eine Befestigung (31) vorhanden, die dauerhaft oder lösbar sein kann. In den gezeigten Ausführungsbeispielen ist eine Schraubverbindung vorgesehen.

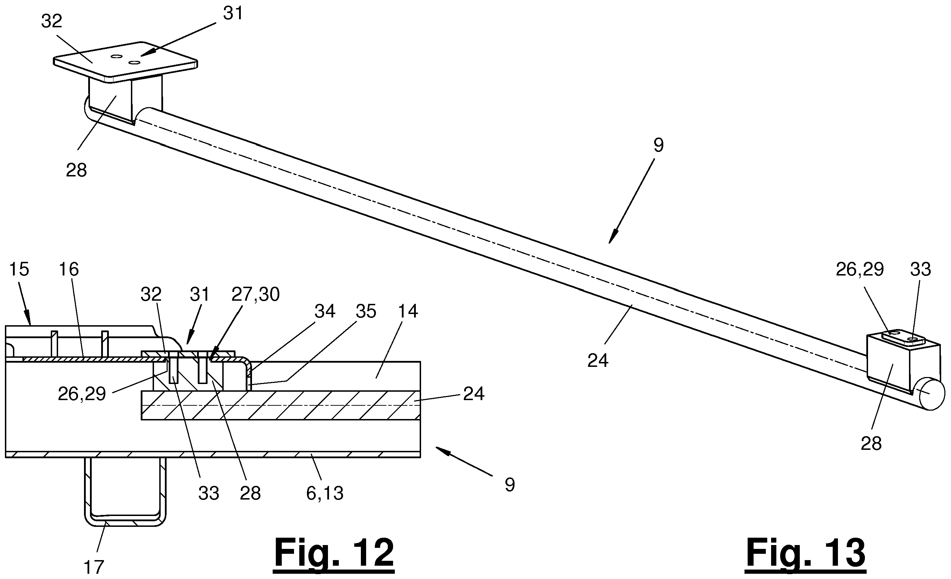

Die Stabilisierungseinrichtung (9), insbesondere deren Montagebeschlag (25), weist einen Stützkörper (28) auf, der mit dem Stabilisierungselement (24) an dessen Endbereich fest verbunden ist. Der Stützkörper (28) steht quer vom länglichen Stabilisierungselement (24) ab. Figur 13 zeigt diese Anordnung von zwei Stützkörpern (28) an den Enden des Torsionsstabs (24), die z.B. durch eine Schweiß-Klebe- oder Schraubverbindung befestigt sind.

Die Stützkörper (28) stellen die Montageverbindung zwischen dem Stabilisierungselement (24) und dem Achskopf (15), vorzugsweise mit dessen Kopfteil (16) bzw. Bodenplatte, her. Sie distanzieren außerdem das Stabilisierungselement (24) vom Achskopf (15), insbesondere von dessen Kopfteil (16) bzw. Bodenplatte. Figur 12 zeigt diese Anordnung. In der Montagestellung sind die Stützkörper (28) aufrecht ausgerichtet und erstrecken sich quer zur Längsachse des Torsionsstabs (24) .

Sie tragen außerdem die eine Schnittstelle (26). Deren Schnittstellenelement (29) sind in den gezeigten Ausführungsbeispielen in Form eines zentralen, erhabenen stufenförmigen Ansatzes an der freien Oberseite des jeweiligen Stützkörpers (28) angeordnet sein. Hier sind außerdem zwei Schraubbohrungen (33) für die Befestigung (31) angeordnet.

Wie Figur 12 im Längsschnitt zeigt, ist am Kopfteil (16) bzw. an der Bodenplatte (16) die andere Schnittstelle (27) angeordnet. Deren Schnittstellenelement (30) ist als Durchgangsöffnung oder Ausschnitt ausgebildet ist und hat die gleiche Umfangskontur wie der Ansatz (29), sodass durch den weitgehend spielfreien formschlüssigen Eingriff von Ansatz (29) und Ausschnitt (30) die Lasten, insbesondere Torsionsmomente, aufgenommen und übertragen werden können.

Die Befestigung (31) weist ferner eine Platte (32) auf, die ebenfalls Schraubbohrungen (33) analog zum Stützkörper (28) aufweist. Die Platte (32) übergreift seitlich die Öffnung (30), sodass in der Montagestellung die Bodenplatte (16) zwischen dem Stützkörper (28) und der Platte (32) mit der Schraubverbindung oder dgl. eingespannt und fixiert werden kann.

Figur 11 und 12 verdeutlichen außerdem die verdeckte Montagesituation. Das Stabilisierungselement (24), insbesondere der Torsionsstab, ragt an beiden Enden durch die Ausnehmung (35) am Stützelement (34) des jeweiligen Achskopfes (15). Der Stützkopf (28) ist geschützt in dem von der Bodenplatte (16) abgedeckten Endbereich des hohlen Achskörpers (13) untergebracht. Die Schnittstellen (26,27) bzw. die Schnittstellenelemente (29,30) sind durch die Platte (32) abgedeckt und geschützt.

Die Montage der Stabilisierungseinrichtung (9) am Kopfteil (16) hat den Vorteil einer direkten Kraft- und Momentenübertragung zu der Federung (7) und dem Dämpfer (8), die ebenfalls über die Anschlüsse (20,22) an diesem Kopfteil (16) angreifen. Die Endbereiche des Achskörpers (13) sind durch das Kopfteil (16) abgedeckt und mechanisch stabilisiert. In den freien Achsbereich zwischen den Achsköpfen (15) sorgt die Stabilisierungseinrichtung (24) für die mechanische Stabilität des Achskörpers (13).

Die montierte Stabilisierungseinrichtung (9) endet in der bevorzugten Ausführung mit Abstand vor den Stirnenden des hohlen Achskörpers (13) und der stirnseitigen Kopfteile (18). Dies ist für einen nachträglichen Einbau und ein Einfädeln in den hohlen Achskörper (13) von Vorteil.

Die Achsanordnung (5) kann modular ausgebildet sein und sich mit wenig Aufwand an unterschiedliche Fahrgestelle (2) oder Chassis von Fahrzeugen (1) anpassen. Die Modularität kann insbesondere die Achsböcke (10) betreffen, die je nach Chassisausbildung und Anbaumöglichkeit variieren können. Die Achsböcke (10) und ggf. deren Längslenker (11) können austauschbar sein.

Die Achse (6) und ihre Komponenten können dabei ggf. beibehalten werden. Sie kann in einem Baukastensystem mit verschiedenen Achsböcken (10) kombiniert werden.

Eine Achsbockvariante kann z.B. zum Anbau an der Unterseite des Chassis (2) bzw. der Längsträger (3) ausgebildet sein. In einer anderen Variante zu den gezeigten Ausführungsbeispielen kann eine Größenanpassung an variierende Längsträgermaße oder an andere chassisseitige Anbauvorgaben erfolgen.

Die Variationen können auch die Ausbildung der Konsolen für die Federung (7) und die Dämpfer (8) betreffen. Durch Veränderung der Konsolenlänge kann eine Anpassung an unterschiedliche Chassisbreiten oder Spurweiten erfolgen, wobei die Länge der Achse (6), insbesondere des Achskörpers (13) und die Anordnung der Achsköpfe (15) beibehalten werden.

Abwandlungen der gezeigten und beschriebenen Ausführungsformen sind in verschiedener Weise möglich. Insbesondere können die Merkmale der Ausführungsbeispiele und der genannten Abwandlungen beliebig miteinander kombiniert, insbesondere auch vertauscht werden.

Die Schnittstellen (26,27) und die Schnittstellenelemente (29,30) können anders ausgebildet sein und ggf. auch anders zusammenwirken. Die gezeigte Anordnung und Zuordnung kann umgekehrt werden, wobei das erhabene oder vorstehende Schnittstellenelement (29) am Achskopf (15) angeordnet ist. Ein Formschluss kann auch nur für Definition und Kombinierbarkeit der Schnittstellenelemente (29,30) vorhanden sein, wobei die Kräfte bzw. Momente anderweitig, z.B. durch Kraftschluss übertragen werden.

Ferner sind konstruktive Abwandlungen des Montagebeschlags (25) und des Achskopfes (15) möglich. Der Achskopf (15) kann z.B. als Guss- oder Schmiedeteil ausgebildet sein. Er kann auch an der Stirnseite des hohlen Achskörpers (13) angeordnet und befestigt sein.

### BEZUGSZEICHENLISTE

- 1: Fahrzeug, Straßenfahrzeug
- 2: Fahrgestell, Chassis
- 3: Längsträger
- 4: Querträger
- 5: Achsanordnung
- 6: Achse
- 7: Federung, Luftfeder, Schraubenfeder
- 8: Dämpfer
- 9: Stabilisierungseinrichtung, Achsstabilisierung
- 10: Achsbock
- 11: Längslenker
- 12: Panhardstab
- 13: Achskörper hohl
- 14: Öffnung, Mantelöffnung
- 15: Achskopf
- 16: Kopfteil, Bodenplatte
- 17: Kopfteil, Steg
- 18: Kopfteil, Stirnplatte
- 19: Anschluss, Radträger
- 20: Anschluss, Stützplatte Federung
- 21: Anschluss Längslenker
- 22: Anschluss Dämpfer
- 23: Anschluss Panhardstab
- 24: Stabilisierungselement, Torsionsstab
- 25: Montagebeschlag
- 26: Schnittstelle Stabilisierungseinrichtung
- 27: Schnittstelle Achskopf
- 28: Stützkörper
- 29: Schnittstellenelement, Ansatz
- 30: Schnittstellenelement, Ausschnitt
- 31: Befestigung
- 32: Platte
- 33: Schraube, Schraubbohrung
- 34: Stützelement
- 35: Ausnehmung

## Patentansprüche

1. Achsanordnung für ein Fahrzeug (1), insbesondere ein Straßenfahrzeug, wobei die Achsanordnung (5) eine Achse (6) mit einem Achskörper (13) und mit endseitigen Achsköpfen (15) aufweist, wobei in dem hohlen Achskörper (13) eine Stabilisierungseinrichtung (9) angeordnet ist, die ein Stabilisierungselement (24), insbesondere einen Torsionsstab, mit einem an beiden Enden des Stabilisierungselements (24) angeordneten und an einem Achskopf (15) montierten Montagebeschlag (25) aufweist, wobei der hohle Achskörper (13) eine seitliche Mantelöffnung (14) aufweist, **dadurch gekennzeichnet, dass** die Achsköpfe (15) jeweils an einem Ende des Achskörpers (13) befestigt sind und jeweils einen Anschluss (19) für die Befestigung eines Fahrzeugrads sowie jeweils einen Anschluss (21) für einen Längslenker (11) aufweisen und wobei
die Stabilisierungseinrichtung (9), insbesondere der Montagebeschlag (25), im hohlen Achskörper (13) schweißfrei befestigt ist und
die Stabilisierungseinrichtung (9), insbesondere der Montagebeschlag (25), einen mit dem Stabilisierungselement (24) an dessen Endbereich fest verbundenen Stützkörper (28) aufweist,
der quer vom länglichen Stabilisierungselement (24) absteht.

2. Achsanordnung nach Anspruch 1, **dadurch gekennzeichnet, dass** die Achsanordnung (5) eine Federung (7), insbesondere eine Luftfederung und/oder eine Schraubenfederung, für die Achse (6) aufweist.

3. Achsanordnung nach Anspruch 2, **dadurch gekennzeichnet, dass** die Federung (7) Federelemente, z.B. Luftfederbalge oder Schraubenfedern, zur Anordnung zwischen dem Chassis (2) und der Achse (6) aufweist, wobei die Federelemente am unteren Ende mit dem jeweiligen Achskopf (15) verbunden sind.

4. Achsanordnung nach Anspruch 1, 2 oder 3, **dadurch gekennzeichnet, dass** der Montagebeschlag (25) und der Achskopf (15) lastaufnehmend und formschlüssig aneinander montiert sind und eine ggf. lösbare Befestigung (31), insbesondere eine Schraubverbindung, aufweisen.

5. Achsanordnung nach einem der vorhergehenden Ansprüche, **dadurch gekennzeichnet, dass** die Stabilisierungseinrichtung (9) und die Achse (6) definierte und aneinander angepasste Schnittstellen (26,27) für die zulassungsgerechte Zuordnung und Montage aufweisen, wobei am Stützkörper (28) eine Schnittstelle (26) angeordnet ist.

6. Achsanordnung nach einem der vorhergehenden Ansprüche, **dadurch gekennzeichnet, dass** die Achsanordnung (5) einen an einem Chassis (2) des Fahrzeugs (1) montierbaren Achsbock (10) mit einem Längslenker (11) für die Achse (6) aufweist.

7. Achsanordnung nach Anspruch 6, **dadurch gekennzeichnet, dass** die Achsanordnung (5) modular ausgebildet ist und unterschiedliche Achsböcke (10) zur Anpassung der Achsanordnung (5) an unterschiedliche Chassis (2) aufweist.

8. Achsanordnung nach einem der vorhergehenden Ansprüche, **dadurch gekennzeichnet, dass** der Achskopf (15) als Guss- oder Schmiedeteil ausgebildet ist.

9. Achsanordnung nach einem der vorhergehenden Ansprüche, **dadurch gekennzeichnet, dass** der Achskopf (15) mehrere plattenartige Kopfteile (16,17,18) aufweist und als gebogenes und/oder geschweißtes Blechteil ausgebildet ist.

10. Achsanordnung nach einem der vorhergehenden Ansprüche, **dadurch gekennzeichnet, dass** der Achsbock (15) ein in den hohlen Achskörper (13) greifendes Stützelement (34) aufweist.

11. Umrüsteinheit für eine Achsanordnung eines Fahrzeugs (1), insbesondere ein Straßenfahrzeugs, wobei die Achsanordnung (5) eine Achse (6), insbesondere eine Starrachse, mit einem hohlen Achskörper (13) und mit endseitigen Achsköpfen (15) sowie einer Federung (7) aufweist, **dadurch gekennzeichnet, dass** die Umrüsteinheit eine Luftfederung (7) und eine Stabilisierungseinrichtung (9) umfasst, welche ein Stabilisierungselement (24), insbesondere einen Torsionsstab, mit einem endseitigen Montagebeschlag (25) für die Montage an einem Achskopf (15) aufweist, wobei der Montagebeschlag (25) für eine schweißfreie Montage ausgebildet ist, und wobei die Stabilisierungseinrichtung (9), insbesondere der Montagebeschlag (25), einen mit dem Stabilisierungselement (24) an dessen Endbereich fest verbundenen Stützkörper (28) aufweist, der quer vom länglichen Stabilisierungselement (24) absteht.

12. Umrüsteinheit nach Anspruch 11, **dadurch gekennzeichnet, dass** die Stabilisierungseinrichtung (9) eine definierte Schnittstelle (26) für die zulassungsgerechte Zuordnung und Montage aufweist, die an eine Schnittstelle (27) der Achse (6) angepasst ist, wobei die Schnittstellen (26) am Stützkörper (28) angeordnet sind.

13. Umrüsteinheit nach Anspruch 11 oder 12, **dadurch gekennzeichnet, dass** der Montagebeschlag (25) für eine lastaufnehmende formschlüssige Montage ausgebildet ist und eine ggf. lösbare Befestigung (31), insbesondere eine Schraubverbindung, aufweist.

14. Fahrzeug, insbesondere Straßenfahrzeug, mit einer Achsanordnung (5), die eine Achse (6), insbesondere eine Starrachse, mit einem hohlen Achskörper (13) und mit endseitigen Achsköpfen (15) aufweist, **dadurch gekennzeichnet, dass** die Achsanordnung (5) nach mindestens einem der Ansprüche 1 bis 10 ausgebildet ist.

15. Fahrzeug nach Anspruch 14, **dadurch gekennzeichnet, dass** das Fahrzeug (1) als Anhänger oder als Kraftfahrzeug ausgebildet ist, wobei das Kraftfahrzeug (1) bevorzugt einen motorisierten Zugkopf mit einem Frontantrieb und ein Anbauchassis (2) mit der Achsanordnung (5) aufweist.

## Claims

1. Axle assembly for a vehicle (1), in particular a road vehicle, wherein the axle assembly (5) has an axle (6) having an axle member (13) and having end-side axle hub units (15), wherein a stabilizing installation (9) which has a stabilizing element (24), in particular a torsion bar, having an assembly fitting (25) which is disposed on both ends of the stabilizing element (23) and is assembled on an axle hub unit (15) is disposed in the hollow axle member (13), wherein the hollow axle member (13) has a lateral casing opening (14), **characterized in that** the axle hub units (15) are in each case fastened to one end of the axle member (13) and have in each case one connector (19) for fastening a vehicle wheel as well as in each case one connector (21) for a trailing arm (11), and wherein the stabilizing installation (9), in particular the assembly fitting (25), is fastened in a weld-free manner in the hollow axle member (13), and the stabilizing installation (9), in particular the assembly fitting (25), has a support member (28) which is fixedly connected to the stabilizing element (24) at the end region of the latter and projects transversely from the elongate stabilizing element (24).

2. Axle assembly according to Claim 1, **characterized in that** the axle assembly (5) has a suspension (7), in particular an air suspension and/or a coil spring suspension, for the axle (6).

3. Axle assembly according to Claim 2, **characterized in that** the suspension (7) has spring elements, for example air spring bellows or coil springs, for disposal between the chassis (2) and the axle (6), wherein the spring elements at the lower end are connected to the respective axle hub unit (15).

4. Axle assembly according to Claim 1, 2, or 3, **characterized in that** the assembly fitting (25) and the axle hub unit (15) are assembled on one another in a load-bearing and form-fitting manner, and have an optionally releasable fastening (31), in particular a screw connection.

5. Axle assembly according to one of the preceding claims, **characterized in that** the stabilizing installation (9) and the axle (6) for the correct allocation and assembly in terms of roadworthiness have defined and mutually adapted interfaces (26, 27), wherein one interface (26) is disposed on the support member (28).

6. Axle assembly according to one of the preceding claims, **characterized in that** the axle assembly (5) has an axle mount (10) which is able to be assembled on a chassis (2) of the vehicle (1) and has a trailing arm (11) for the axle (6).

7. Axle assembly according to Claim 6, **characterized in that** the axle assembly (5) is of modular configuration and for adapting the axle assembly (5) to dissimilar chassis (2) has dissimilar axle mounts (10).

8. Axle assembly according to one of the preceding claims, **characterized in that** the axle hub unit (15) is configured as a casting or a forged part.

9. Axle assembly according to one of the preceding claims, **characterized in that** the axle hub unit (15) has a plurality of plate-type hub parts (16, 17, 18) and is configured as a bent and/or welded sheet-metal part.

10. Axle assembly according to one of the preceding claims, **characterized in that** the axle mount (15) has a support element (34) which engages into the hollow axle member (13).

11. Retrofitting unit for an axle assembly of a vehicle (1), in particular a road vehicle, wherein the axle assembly (5) has an axle (6), in particular a rigid axle, having a hollow axle member (13) and having end-side axle hub units (15) as well as a suspension (7), **characterized in that** the retrofitting unit comprises an air suspension (7) and a stabilizing installation (9) which has a stabilizing element (24), in particular a torsion bar, having an end-side assembly fitting (25) for the assembly on an axle hub unit (15), wherein the assembly fitting (25) is configured for weld-free assembling, and wherein the stabilizing installation (9), in particular the assembly fitting (25), has a support member (28) which is fixedly connected to the stabilizing element (24) at the end region of the latter and projects transversely from the elongate stabilizing element (24) .

12. Retrofitting unit according to Claim 11, **characterized in that** the stabilizing installation (9) for the correct allocation and assembly in terms of roadworthiness has a defined interface (26) which is adapted to an interface (27) of the axle (6), wherein the interfaces (26) are disposed on the support member (28).

13. Retrofitting unit according to Claim 11 or 12, **characterized in that** the assembly fitting (25) is configured for assembly in a load-bearing and form-fitting manner and has an optionally releasable fastening (31), in particular a screw connection.

14. Vehicle, in particular a road vehicle, having an axle assembly (5) which has an axle (6), in particular a rigid axle, having a hollow axle member (13) and end-side axle hub units (15), **characterized in that** the axle assembly (5) is configured according to at least one of Claims 1 to 10.

15. Vehicle according to Claim 14, **characterized in that** the vehicle (1) is configured as a trailer or a motor vehicle, wherein the motor vehicle (1) preferably has a motorized tractor unit having front-wheel drive and an add-on chassis (2) having the axle assembly (5).

## Revendications

1. Ensemble essieu pour un véhicule (1), en particulier un véhicule routier, l'ensemble essieu (5) présentant un essieu (6) avec un corps d'essieu (13) et avec des têtes d'essieu (15) du côté des extrémités, un dispositif de stabilisation (9) étant disposé dans le corps d'essieu creux (13) et présentant un élément de stabilisation (24), en particulier une barre de torsion, avec une ferrure de montage (25) disposée au niveau des deux extrémités de l'élément de stabilisation (24) et montée sur une tête d'essieu (15), le corps d'essieu creux (13) présentant une ouverture d'enveloppe latérale (14),
**caractérisé en ce que**
les têtes d'essieu (15) sont chacune fixées à une extrémité du corps d'essieu (13) et présentent à chaque fois un raccord (19) pour la fixation d'une roue du véhicule et à chaque fois un raccord (21) pour un bras oscillant longitudinal (11) et
le dispositif de stabilisation (9), en particulier la ferrure de montage (25), étant fixé(e) sans soudure dans le corps d'essieu creux (13) et
le dispositif de stabilisation (9), en particulier la ferrure de montage (25), présentant un corps de support (28) raccordé fixement à l'élément de stabilisation (24) au niveau de sa région d'extrémité,
lequel fait saillie transversalement depuis l'élément de stabilisation allongé (24).

2. Ensemble essieu selon la revendication 1, **caractérisé en ce que** l'ensemble essieu (5) présente une suspension (7), en particulier une suspension pneumatique et/ou une suspension à ressort pour l'essieu (6).

3. Ensemble essieu selon la revendication 2, **caractérisé en ce que** la suspension (7) présente des éléments de ressort, par exemple des soufflets de suspension ou des ressorts hélicoïdaux destinés à être disposés entre le châssis (2) et l'essieu (6), les éléments de ressort étant raccordés par l'extrémité inférieure à la tête d'essieu respective (15).

4. Ensemble essieu selon la revendication 1, 2 ou 3, **caractérisé en ce que** la ferrure de montage (25) et la tête d'essieu (15) sont montées de manière à recevoir la charge et par engagement par correspondance de formes l'une avec l'autre, et présentent une fixation éventuellement amovible (31), en particulier une connexion vissée.

5. Ensemble essieu selon l'une quelconque des revendications précédentes, **caractérisé en ce que** le dispositif de stabilisation (9) et l'essieu (6) présentent des interfaces définies et adaptées l'une à l'autre (26, 27) pour une affectation et un montage conformes au prescriptions, une interface (26) étant disposée au niveau du corps de support (28).

6. Ensemble essieu selon l'une quelconque des revendications précédentes, **caractérisé en ce que** l'ensemble essieu (5) présente un chevalet d'essieu (10) pouvant être monté sur un châssis (2) du véhicule (1) avec un bras oscillant longitudinal (11) pour l'essieu (6).

7. Ensemble essieu selon la revendication 6, **caractérisé en ce que** l'ensemble essieu (5) est réalisé sous forme modulaire et présente des chevalets d'essieu différents (10) pour l'adaptation de l'ensemble essieu (5) à des châssis (2) différents.

8. Ensemble essieu selon l'une quelconque des revendications précédentes, **caractérisé en ce que** la tête d'essieu (15) est réalisée sous forme de pièce coulée ou forgée.

9. Ensemble essieu selon l'une quelconque des revendications précédentes, **caractérisé en ce que** la tête d'essieu (15) présente plusieurs parties de tête en forme de plaque (16, 17, 18) et est réalisée sous forme de pièce en tôle cintrée et/ou soudée.

10. Ensemble essieu selon l'une quelconque des revendications précédentes, **caractérisé en ce que** le chevalet d'essieu (15) présente un élément de support (34) s'engageant dans le corps d'essieu creux (13).

11. Unité d'équipement pour un ensemble essieu d'un véhicule (1), en particulier d'un véhicule routier, l'ensemble essieu (5) présentant un essieu (6), en particulier un essieu rigide, avec un corps d'essieu creux (13) et avec des têtes d'essieu (15) du côté des extrémités, ainsi qu'une suspension (7), **caractérisée en ce que** l'unité d'équipement comprend une suspension pneumatique (7) et un dispositif de stabilisation (9) qui présente un élément de stabilisation (24), en particulier une barre de torsion, avec une ferrure de montage du côté de l'extrémité (25) pour le montage sur une tête d'essieu (15), la ferrure de montage (25) étant réalisée pour un montage sans soudure et le dispositif de stabilisation (9), en particulier la ferrure de montage (25), présentant un corps de support (28) raccordé fixement à l'élément de stabilisation (24) au niveau de sa région d'extrémité, lequel fait saillie transversalement depuis l'élément de stabilisation allongé (24).

12. Unité d'équipement selon la revendication 11, **caractérisée en ce que** le dispositif de stabilisation (9) présente une interface définie (26) pour l'affectation et le montage conformes aux prescriptions, qui est adaptée à une interface (27) de l'essieu (6), les interfaces (26) étant disposées au niveau du corps de support (28).

13. Unité d'équipement selon la revendication 11 ou 12, **caractérisée en ce que** la ferrure de montage (25) est réalisée pour un montage recevant la charge, par engagement par correspondance de formes, et présente une fixation éventuellement amovible (31), en particulier une connexion vissée.

14. Véhicule, en particulier véhicule routier, comprenant un ensemble essieu (5) qui présente un essieu (6), en particulier un essieu rigide, avec un corps d'essieu creux (13) et avec des têtes d'essieu (15) du côté des extrémités, **caractérisé en ce que** l'ensemble essieu (5) est réalisé selon au moins l'une quelconque des revendications 1 à 10.

15. Véhicule selon la revendication 14, **caractérisé en ce que** le véhicule (1) est réalisé sous forme de remorque ou de véhicule automobile, le véhicule automobile (1) présentant de préférence une tête de traction motorisée avec un entraînement avant et un châssis de montage (2) avec l'ensemble essieu (5).
